# EUROPEAN PATENT APPLICATION

(11) **EP 4 040 645 A1**
(43) Date of publication of application: **10.08.2022**
(21) Application number: 22152236.0
(22) Date of filing: 19.01.2022
(51) Int. Cl.: H02K 3/16, H02K 1/26, H02K 19/10, H02K 19/22, H02K 3/20

(54) **LOW LOSSES DAMPER BAR FOR ELECTRIC MACHINES**

(30) Priority: 08.02.2021 US 202117170654
(71) Applicant: Honeywell International Inc., Charlotte, NC 28202 (US)
(72) Inventor: ANGHEL, Cristian E., Charlotte, 28202 (US); JUNG, Yongbae, Charlotte, 28202 (US)
(74) Representative: LKGlobal UK Ltd.

(57) **Abstract**

In an example, a rotor for an electric machine includes a cylindrical central portion, and a plurality of poles extending from the cylindrical central portion in a radial direction. Each pole of the plurality of poles includes a top surface that includes one or more slots that are located in and extend across the top surface. The rotor further includes a plurality of stranded wire damper windings, wherein each stranded wire damper winding of the plurality of stranded wire damper windings includes two or more conductor wires twisted together and insulated from each other. The two or more conductor wires are twisted together five or more times, and each respective stranded wire damper winding of the plurality of stranded wire damper windings is positioned within a respective slot of the one or more slots of a respective pole of the plurality of poles.

## Description

### BACKGROUND

There is an increasing demand for high-power generators in the 200-kilowatt (kW) to one megawatt (MW) range for hybrid-electric propulsion, directed energy weapons, and other applications requiring high power electric machines. At the same time, many of these applications cannot tolerate an increase in weight and volume of the generator used to achieve the increased power output.

Unfortunately, one byproduct of increased power output of an electrical generator conventionally is an increase in heat production due, at least in part, to electrical and mechanical losses in the operation of the generator. Typical power generators for aircraft and other vehicle are either air cooled or liquid cooled. Liquid cooling, typically with oil can be implemented in one of three ways: spray-cooled, conduction cooled, or a combination of both spray and conduction. The spray cooling techniques provide very good heat extraction, but typically have the disadvantage of increased mechanical losses produced by windage in the generator. This is caused by oil being in contact with the rotor components of the generator that rotate at very high speeds. Further, these cooling systems add to the weight and size of the generator.

High power density generators may create additional electrical losses such that traditional methods of heat extraction are ineffective within the weight and size constraints of some electric machines. The AC losses in the rotor caused by copper and eddy currents and proximity effect may dominate in the electrical losses of megawatt generators. Eddy currents are present in the damper bars used in the rotor, and depending on the generator power rating, the damper bar losses can range from hundreds of Watts to a few kW. These losses contribute to the difficulty in cooling the rotor. Traditional cooling systems may not be effective for continuous operation at rated power and thereby limiting significantly the capabilities of the electrical machine.

Thus, there is a need in the art for high-efficiency (low loss) megawatt generators such that the desired power levels can be achieved within the size and space constraints of the electric machines incorporating the generators.

### SUMMARY

In an example, a rotor for an electric machine includes a cylindrical central portion, and a plurality of poles extending from the cylindrical central portion in a radial direction. Each pole of the plurality of poles includes a top surface that includes one or more slots that are located in and extend across the top surface. The rotor further includes a plurality of stranded wire damper windings, wherein each stranded wire damper winding of the plurality of stranded wire damper windings includes two or more conductor wires twisted together and insulated from each other. The two or more conductor wires are twisted together five or more times, and each respective stranded wire damper winding of the plurality of stranded wire damper windings is positioned within a respective slot of the one or more slots of a respective pole of the plurality of poles.

### DRAWINGS

Understanding that the drawings depict only exemplary embodiments and are not therefore to be considered limiting in scope, the exemplary embodiments will be described with additional specificity and detail through the use of the accompanying drawings, in which:
FIG. 1 is a cross-sectional view of an example rotor of an electric machine;
FIGS. 2A a top perspective view of an example rotor of an electric machine;
FIG. 2B is a top view of an example rotor of an electric machine
FIG. 2C is a top perspective view of an example rotor of an electric machine including stranded wire damper windings;
FIG. 3 is a graph of losses for damper windings based on the number of conductor wires; and
FIG. 4 is a flow diagram of an example method for manufacturing stranded wire damper windings and inserting the stranded wire damper windings in a rotor.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Traditionally, damper bars included in the rotors of an electric machine are made of a single piece of solid metal. The most common material for damper bars is copper, but other metals or alloys could also be used. The electric machines that include the damper bars can rotate at approximately 19,000 revolutions per minute and there is a large frequency of the flux (for example, approximately 1266 Hz). Due to the shape of the stator of the electric machines (includes open slots), the magnetic field is not completely uniform, and eddy currents are generated on the surface of the rotor. These high-frequency eddy currents couple into the solid metal damper bars and cause losses that are proportional to the diameter of the solid metal damper bars. It is desirable for these losses to be reduced to improve the efficiency of an electric machine, which would be particularly advantageous for the high-efficiency generators discussed above.

The embodiments described herein provide systems and methods for reducing the losses and weight, size, and cost associated with current solid metal damper bars by using stranded wire damping windings in the rotor of an electric machine. The stranded wire damper windings include two or more conductor wires insulated from each other and twisted together five or more times. The stranded wire damper windings are included in slots in a top surface of poles of the rotor of the electric machine. Depending on the diameter and the number of conductor wires included in the stranded wire damper windings, the losses due to eddy currents can be reduced by approximately 30 to 93% compared to the solid metal damper bars.

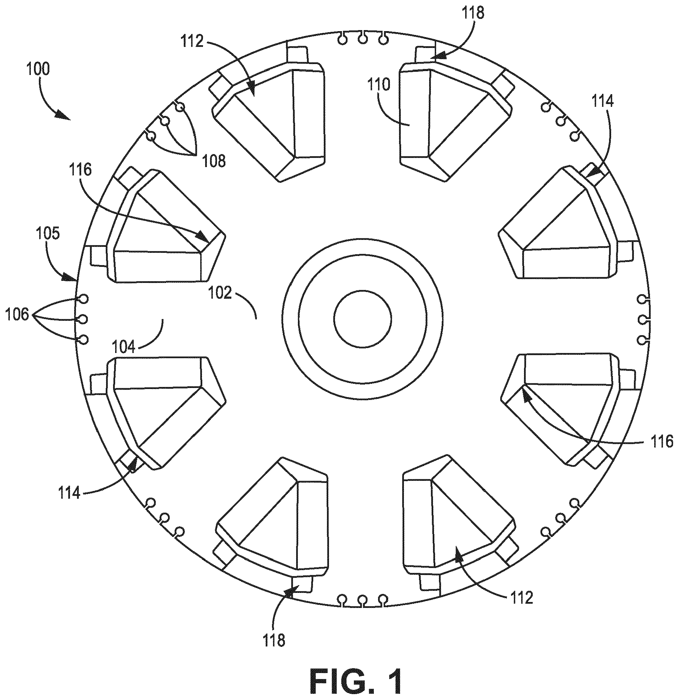

FIG. 1 illustrates a cross-sectional view of an example rotor 100 of an electric machine. In some examples, the electric machine is a synchronous generator configured to produce electrical power. In some examples, the electric machine is a motor configured to produce mechanical power when electrical power is input into terminals of the electric machine. In some examples, the electric machine includes a housing, a stator disposed in the housing, and a rotor disposed in the stator. In such examples, there is a gap between the stator and the rotor.

In the example shown in FIG. 1, the rotor 100 includes a cylindrical central portion 102, poles 104, one or more slots 106 in each of the poles 104, stranded wire damper windings 108 in each of the one or more slots 106, and coils 110.

In the example shown in FIG. 1, the cylindrical central portion 102 of the rotor 100 rotates about a central axis, and the poles 104 extend away from the central axis of the cylindrical central portion 102 in a radial direction. The cylindrical central portion 102 and the poles 104 of the rotor 100 are formed of a magnetic material. In some examples, the cylindrical central portion 102 and the poles 104 are formed of Hiperco^{®} 50 or a similar magnetic material.

In the example shown in FIG. 1, the rotor 100 includes coils 110 that encircle the rotor 100 and surround the poles 104 of the rotor 100. In some examples, the coils 110 are formed of a conductive material and are held in place using a number of components. In the example shown in FIG. 1, the coils 110 are positioned and secured using wedges 112, 114, 116 and band supports 118.

In the example shown in FIG. 1, the poles 104 of the rotor 100 each include three slots 106 in a top surface 105 of the pole 104. It should be understood that this is merely one example, and a different number of slots 106 (including one) could also be included in each of the poles 104 of the rotor 100 depending on the desired performance characteristics. In the example shown in FIG. 1, the slots 106 in the top surface 105 of the poles 104 of the rotor 100 have an approximately circular cross-section. In the example shown in FIG. 1, the slots 106 in the top surface 105 of the poles 104 of the rotor 100 also include an approximately rectangular-shaped slit between the approximately circular cross-section and the top surface 105 of the poles 104 of the rotor 100. In other examples, the slots 106 in the top surface 105 of the poles 104 of the rotor 100 have an approximately square-shaped cross-section. In some such examples, the slots 106 in the top surface 105 of the poles 104 of the rotor 100 also include an approximately rectangular-shaped slit between the approximately squared-shaped cross-section and the top surface 105 of the poles 104 of the rotor 100. In other examples, the slots 106 in the top surface 105 of the poles 104 of the rotor 100 can have a different shape cross-section. In some such examples, the slots 106 in the top surface 105 of the poles 104 of the rotor 100 also include an approximately rectangular-shaped slit similar to that discussed above for the circular or squared-shaped examples.

The size of the cross-section of the slots 106 in the top surface 105 of the poles 104 of the rotor 100 depends on the rating of electric machine. In particular, the size of the cross-section of the slots 106 in the top surface 105 of the poles 104 of the rotor 100 increases as the power rating of the electric machine increases. For example, when the electric machine is a 250-500 kilowatt generator, the diameter of a circular cross-section of the slots 106 can be approximately 60 thou, and when the electric machine is a one-megawatt generator, the diameter of a circular cross-section of the slots 106 can be approximately 105 thou. It should be understood that the specific sizes of the cross-sections included above are exemplary and the size of the cross-section of the slots 106 in the top surface 105 of the poles 104 of the rotor 100 can be different depending on the design requirements and desired performance characteristics of the electric machine.

The rotor 100 includes a stranded wire damper winding 108 in each slot 106 in the top surface 105 of the poles 104 of the rotor 100. The stranded wire damper winding 108 includes two or more conductor wires that are twisted together at least five times. In some examples, the conductor wires are twisted together ten or more times. The twisting (and particularly the higher number of twists) of the conductor wires provides both mechanical and electrical benefits. For example, the twisting of the conductor wires holds the conductor wires in place when the rotor 100 rotates at high speed (mechanical benefit) and also can aid in reducing the losses (electrical benefit).

In some examples, the conductor wires of the stranded wire damper windings 108 are formed of copper or a copper alloy (for example, including nickel). In other examples, the conductor wires are formed of aluminum, brass, or a different conductive material. The ratio of conductive materials used in the conductive winding will vary depending on performance requirements for the stranded wire damper windings 108.

The two or more conductor wires of the stranded wire damper winding 108 are insulated from each other using an insulator. In some examples, the insulator is formed of polyamide. In other examples, the insulator is formed of a different insulative material. For some applications, it is desirable for the insulator to be rated for a temperature up to 240 C or higher. In some examples, in addition to the insulator used to insulate the conductor wires from each other, the stranded wire damper winding 108 also includes an insulator around all of the conductor wires. This additional insulator can improve ease of insertion into the slots 106 in the top surface 105 of the poles 104 of the rotor 100.

As discussed above, the stranded wire damper windings 108 include two or more conductor wires. The conductor wires of the stranded wire damper windings 108 have a smaller diameter than the solid metal damper bars currently used. The particular number of conductor wires and the particular diameter of the conductor wires included in the stranded wire damper windings 108 can be selected based on a number of factors. For example, the number of conductor wires and the diameter of the conductor wires can be selected based on the shape of the cross-section of the slots 106 in the top surface 105 of the poles 104 of the rotor 100, the size of the cross-section of the slots 106 in the top surface 105 of the poles 104 of the rotor 100, the desired loss performance, and/or the desired fill factor (for example, at least 60-70%) of the stranded wire damper windings 108 in the slots 106 in the top surface 105 of the poles 104 of the rotor 100. Other factors could also be used to determine the diameter of the conductor wires.

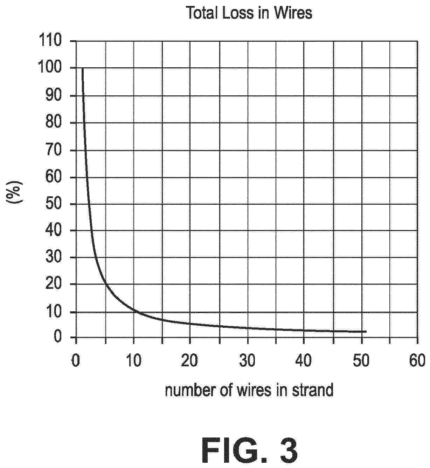

The total loss in the stranded wire damper windings 108 decreases as the number of conductor wires in the stranded wire damper windings 108 increases. FIG. 3 illustrates a graph showing the approximate losses in the stranded wire damper windings 108 (as a percentage of the losses in the solid metal damper bars) for different numbers of conductor wires. As shown in FIG. 3, using two conductor wires in the stranded wire damper windings 108 provides an approximate 30+% reduction in losses compared to the solid metal damper bars currently used, using five or more conductor wires in the stranded wire damper windings 108 provides an approximate 80+% reduction in losses compared to the solid metal damper bars currently used, and using ten or more conductor wires in the stranded wire damper windings 108 provides an approximate 90+% reduction in losses compared to the solid metal damper bars currently used.

In some examples, the stranded wire damper windings 108 include three or four conductor wires in order to provide a better fit and fill factor inside the slots 106 in the top surface 105 of the poles 104 of the rotor 100 (for example, having an approximately circular or square-shaped cross-section). In some examples, the stranded wire damper windings 108 include five or more conductor wires to improve loss reduction and the fill factor of the stranded wire damper windings 108 in the slots 106 in the top surface 105 of the poles 104 of the rotor 100. In other examples, the stranded wire damper windings 108 include ten or more conductor wires, which further improves loss reduction and the fill factor of the stranded wire damper windings 108 in the slots 106 in the top surface 105 of the poles 104 of the rotor 100.

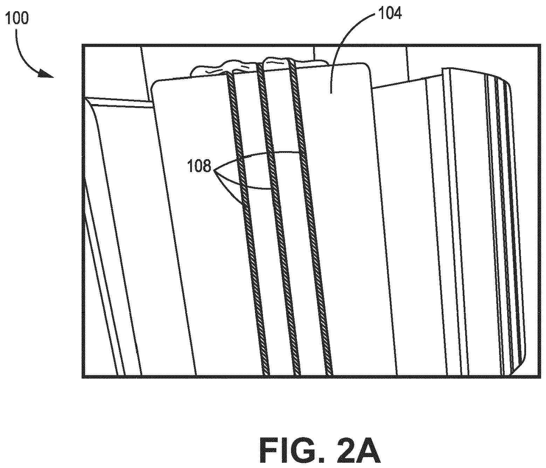

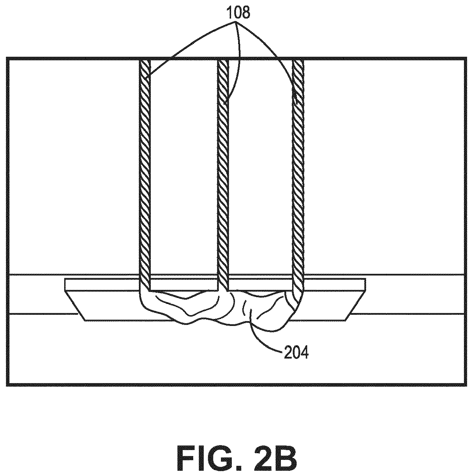

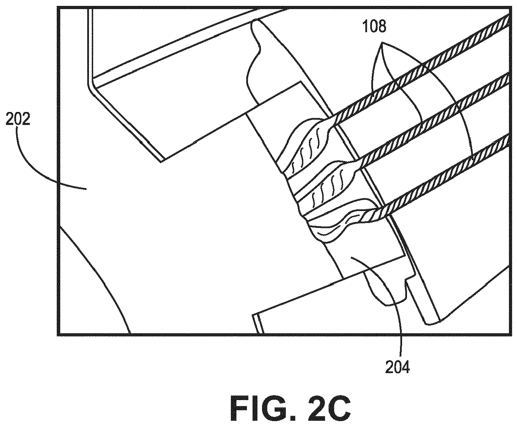

In some examples, such as the examples shown in FIGS. 2A-2C, the rotor 100 includes a conductive plate 202 coupled to each end of the rotor 100. In some examples, the conductive plate 202 is perpendicular to the top surface 105 of the poles 104 of the rotor 100 and has a similar shape to the cross-section of the rotor 100. In some examples, the conductive plate 202 is a copper plate. In other examples, the conductive plate 202 is formed of a different metal (for example, aluminum) or alloy. In the examples shown in FIGS. 2A-2C, the stranded wire damper windings 108 included in the slots 106 in the top surface 105 of the poles 104 of the rotor 100 are brazed (in section 204) to the conductive plate 202. In such examples, the stranded wire damper windings 108 and the conductive plate 202 form a continuous circuit that functions as a squirrel cage.

In some examples, the conductive plate at each end of the rotor 100 is not continuous as shown in FIGS. 2A-2C. In such examples, the conductive plate includes a slit (not shown) that separates the section 204 where the stranded wire damper windings 108 are brazed to the conductive plate and the center portion of the conductive plate. In some such examples, a non-conductive material is placed between the section where the stranded wire damper windings 108 are brazed to the conductive plate and the center portion of the conductive plate. In other examples, an air gap is included between the section where the stranded wire damper windings 108 are brazed to the conductive plate and the center portion of the conductive plate. The examples where the conductive plate includes a slit that separates the section 204 where the stranded wire damper windings 108 are brazed to the conductive plate and the center portion of the conductive plate can allow for better thermal expansion and easier installation compared to the examples shown in FIGS. 2A-2C.

In other examples, the rotor 100 does not include a single conductive plate (such as conductive plate 202) at each end of the rotor 100 that connects every stranded wire damper winding 108 like the examples shown in FIGS. 2A-2C. In some such examples, the conductive plate at each end of the rotor 100 is replaced by smaller conductive plates connected to a respective pole 104 of the rotor 100 only in the section where the stranded wire damper windings 108 are brazed to the conductive plates. The examples where respective conductive plates are included for the section where the stranded wire damper windings 108 are brazed to the conductive plate can also allow for better thermal expansion and easier installation compared to the examples shown in FIGS. 2A-2C.

In other examples, the rotor 100 does not include any conductive plates at each end of the rotor 100 that connect the stranded wire damper windings 108. In some such examples, the stranded wire damper windings 108 for a respective pole 104 of the rotor 100 are brazed to each other without a conductive plate.

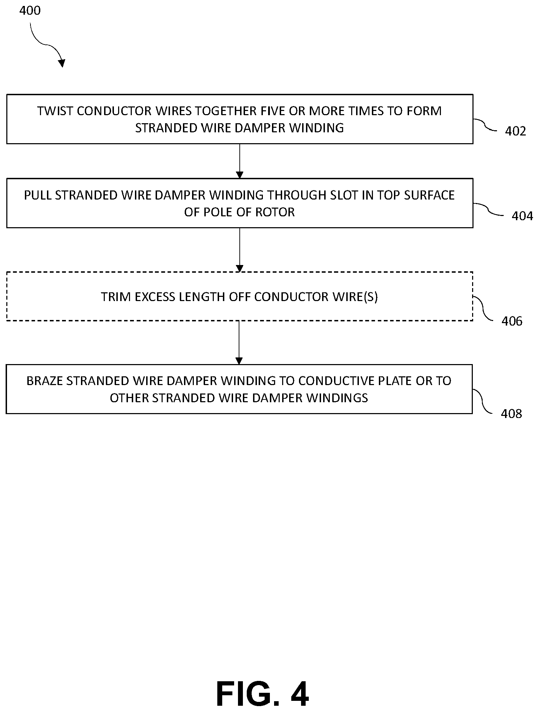

FIG. 4 is an example method for manufacturing the stranded wire damper windings and inserting the stranded wire damper windings in a rotor. The common features discussed above with respect to the rotor 100 in FIGS. 1-2C can include similar characteristics to those discussed with respect to method 400 and *vice versa.*

The method includes twisting conductor wires together five or more time to form a stranded wire damper winding (block 402). In some examples, the conductor wires are coated with an insulator that provides insulation between the conductor wires. In some examples, the conductor wires are twisted together outside of a slot in the top surface of the pole of the rotor to which the stranded wire damper windings will be included.

The method further includes pulling the conductor wires of the stranded wire damper winding through the slot in the top surface of the pole of the rotor (block 404). In some examples, all of the conductor wires in the stranded wire damper winding are the same length. In such examples, the stranded wire damper winding is pulled through the slot in the top surface of the pole of the rotor using all of the conductor wires. In other examples, one or more conductor wires are longer than the other conductor wires in the stranded wire damper winding at this stage. In some such examples, a single conductor wire is longer than the other conductor wires in the stranded wire damper winding at this stage. In other such examples, a few conductor wires are longer than the other conductor wires in the stranded wire damper winding at this stage. In either case, the conductor wire(s) that are longer are used to pull the stranded wire damper winding through the slot in the top surface of the pole of the rotor.

The method optionally includes trimming excess length off one or more conductor wires of the stranded wire damper winding (block 406). In the examples where one or more conductor windings are longer than others in the stranded wire damper winding, the excess length is cut off so all of the conductor wires in the stranded wire damper winding are of similar length.

The method further includes brazing the stranded wire damper windings to a conductive plate or to other stranded wire damper windings (block 408). In some examples, all stranded wire damper windings in the same pole of the rotor are brazed to conductive plates coupled to each end of the rotor. In other examples, the stranded wire damper windings in the same pole of the rotor are brazed to each other (without a conductive plate) at each end of the rotor.

By utilizing the stranded wire damper windings in the rotors of an electric machine, the size, weight, and cost of the electric machine can be reduced. Also, by using two or more conductor wires, the losses from the stranded wire damper windings are significantly reduced compared to the solid metal damper bars currently used, particularly when five or more conductor wires are included in the stranded wire damper windings.

### EXAMPLE EMBODIMENTS

Example 1 includes a rotor for an electric machine, comprising: a cylindrical central portion; a plurality of poles extending from the cylindrical central portion in a radial direction, wherein each pole of the plurality of poles includes a top surface that includes one or more slots that are located in and extend across the top surface; and a plurality of stranded wire damper windings, wherein each stranded wire damper winding of the plurality of stranded wire damper windings includes two or more conductor wires twisted together and insulated from each other, wherein the two or more conductor wires are twisted together five or more times, wherein each respective stranded wire damper winding of the plurality of stranded wire damper windings is positioned within a respective slot of the one or more slots of a respective pole of the plurality of poles.
Example 2 includes the rotor of Example 1, wherein each stranded wire damper winding of the plurality of stranded wire damper windings includes five or more conductor wires twisted together and insulated from each other.
Example 3 includes the rotor of any of Examples 1-2, each stranded wire damper winding of the plurality of stranded wire damper windings includes ten or more conductor wires twisted together and insulated from each other.
Example 4 includes the rotor of any of Examples 1-3, wherein each conductor wire of the two or more conductor wires comprises copper or aluminum.
Example 5 includes the rotor of any of Examples 1-4, wherein each respective pole of the plurality of poles includes a plurality of slots that are located in and extend across the top surface of the respective pole.
Example 6 includes the rotor of any of Examples 1-5, wherein each stranded wire damper winding of the plurality of stranded wire damper windings is brazed to two conductive plates that are positioned approximately perpendicular to the top surface of the respective pole.
Example 7 includes the rotor of any of Examples 1-6, wherein each stranded wire damper winding of the plurality of stranded wire damper windings is brazed to two conductive plates connected to a respective pole of the rotor only in a section where each stranded wire damper windings is brazed to the two conductive plates, wherein the two conductive plates are smaller than the respective pole and positioned approximately perpendicular to the top surface of the respective pole.
Example 8 includes the rotor of any of Examples 1-7, wherein the one or more slots have a circular shape.
Example 9 includes an electric machine, comprising: a housing; a stator disposed in the housing; and a rotor disposed in the stator, wherein there is a gap between the stator and the rotor, wherein the rotor includes: a cylindrical central portion; a plurality of poles extending from the cylindrical central portion in a radial direction, wherein each pole of the plurality of poles includes a top surface that includes one or more slots that are located in and extend across the top surface; and a plurality of stranded wire damper windings, wherein each stranded wire damper winding of the plurality of stranded wire damper windings includes two or more conductor wires twisted together and insulated from each other, wherein the two or more conductor wires are twisted together five or more times, wherein each respective stranded wire damper winding of the plurality of stranded wire damper windings is positioned within a respective slot of the one or more slots of a respective pole of the plurality of poles.
Example 10 includes the electric machine of Example 9, wherein each stranded wire damper winding of the plurality of stranded wire damper windings includes five or more conductor wires twisted together and insulated from each other.
Example 11 includes the electric machine of any of Examples 9-10, wherein each stranded wire damper winding of the plurality of stranded wire damper windings includes ten or more conductor wires twisted together and insulated from each other.
Example 12 includes the electric machine of any of Examples 9-11, wherein each conductor wire of the two or more conductor wires comprises copper or aluminum.
Example 13 includes the electric machine of any of Examples 9-12, wherein each respective pole of the plurality of poles includes a plurality of slots that are located in and extend across the top surface of the respective pole.
Example 14 includes the electric machine of any of Examples 9-13, wherein each stranded wire damper winding of the plurality of stranded wire damper windings is brazed to two conductive plates that are positioned approximately perpendicular to the top surface of the respective pole.
Example 15 includes the electric machine of any of Examples 9-14, further comprising: a first conductive plate coupled to a first end of the rotor, wherein each stranded wire damper winding of the plurality of stranded wire damper windings is electrically coupled to the first conductive plate; and a second conductive plate coupled to a second end of the rotor opposite the first end of the rotor, wherein each stranded wire damper winding of the plurality of stranded wire damper windings is electrically coupled to the second conductive plate.
Example 16 includes the electric machine of any of Examples 9-15, further comprising: a plurality of first conductive plates coupled to a first end of the rotor, wherein each stranded wire damper winding of the plurality of stranded wire damper windings is electrically coupled to one of the plurality of first conductive plates; and a plurality of second conductive plates coupled to a second end of the rotor opposite the first end of the rotor, wherein each stranded wire damper winding of the plurality of stranded wire damper windings is electrically coupled to one of the plurality of second conductive plates.
Example 17 includes the electric machine of Example 16, wherein each first conductive plate of the plurality of first conductive plates is coupled to a single pole of the rotor, wherein each second conductive plate of the plurality of second conductive plates is coupled to a single pole.
Example 18 includes a method, comprising: twisting conductor wires together five or more times to form a stranded wire damper winding, wherein the conductor wires are coated with an insulator to insulate the conductor wires from each other; pulling the stranded wire damper winding through a slot in a top surface of a pole of a rotor using one or more conductor wires; and brazing the stranded wire damper winding to a conductive plate coupled to the pole of the rotor or to one or more other stranded wire damper windings in the pole of the rotor.
Example 19 includes the method of Example 18, wherein the one or more conductor wires used to pull the stranded wire damper winding through the slot in the top surface of the pole of the rotor are longer than other conductor wires included in the stranded wire damper winding; the method further comprising cutting the one or more conductor wires used to pull the stranded wire damper winding through the slot in the top surface of the pole of the rotor to a length of the other conductor wires included in the stranded wire damper winding.
Example 20 includes the method of any of Examples 18-19, wherein twisting conductor wires together five or more times to form a stranded wire damper winding comprises twisting five or more conductor wires together five or more times.

A number of embodiments of the invention defined by the following claims have been described. Nevertheless, it will be understood that various modifications to the described embodiments may be made without departing from the spirit and scope of the claimed invention. Accordingly, other embodiments are within the scope of the following claims.

## Claims

1. A rotor (100) for an electric machine, comprising:
a cylindrical central portion (102);
a plurality of poles (104) extending from the cylindrical central portion (102) in a radial direction, wherein each pole (104) of the plurality of poles (104) includes a top surface (105) that includes one or more slots (106) that are located in and extend across the top surface (105); and
a plurality of stranded wire damper windings (108), wherein each stranded wire damper winding (108) of the plurality of stranded wire damper windings (108) includes two or more conductor wires twisted together and insulated from each other, wherein the two or more conductor wires are twisted together five or more times, wherein each respective stranded wire damper winding (108) of the plurality of stranded wire damper windings (108) is positioned within a respective slot (106) of the one or more slots (106) of a respective pole (104) of the plurality of poles (104).

2. The rotor (100) of claim 1, wherein each stranded wire damper winding (108) of the plurality of stranded wire damper windings (108) includes five or more conductor wires twisted together and insulated from each other.

3. The rotor (100) of claim 1, each stranded wire damper winding (108) of the plurality of stranded wire damper windings (108) includes ten or more conductor wires twisted together and insulated from each other.

4. The rotor (100) of claim 1, wherein each conductor wire of the two or more conductor wires comprises copper or aluminum.

5. The rotor (100) of claim 1, wherein each respective pole (104) of the plurality of poles (104) includes a plurality of slots (106) that are located in and extend across the top surface (105) of the respective pole (104).

6. The rotor (100) of claim 1, wherein each stranded wire damper winding (108) of the plurality of stranded wire damper windings (108) is brazed to two conductive plates (202) that are positioned approximately perpendicular to the top surface (105) of the respective pole (104).

7. The rotor (100) of claim 1, wherein the one or more slots (106) have a circular shape.

8. An electric machine, comprising the rotor (100) of any of claims 1-7, the electric machine further comprising:
a housing;
a stator disposed in the housing; and
wherein the rotor (100) disposed in the stator, wherein there is a gap between the stator and the rotor (100).

9. The electric machine of claim 8, further comprising:
a plurality of first conductive plates coupled to a first end of the rotor (100), wherein each stranded wire damper winding (108) of the plurality of stranded wire damper windings (108) is electrically coupled to one of the plurality of first conductive plates; and
a plurality of second conductive plates coupled to a second end of the rotor (100) opposite the first end of the rotor (100), wherein each stranded wire damper winding (108) of the plurality of stranded wire damper windings (108) is electrically coupled to one of the plurality of second conductive plates.

10. The electric machine of claim 9, wherein each first conductive plate of the plurality of first conductive plates is coupled to a single pole (104) of the rotor (100), wherein each second conductive plate of the plurality of second conductive plates is coupled to a single pole (104).
